# EUROPÄISCHE PATENTSCHRIFT

(11) **EP 1 364 433 B1**
(45) Veröffentlichungstag und Bekanntmachung des Hinweises auf die Patenterteilung: **09.11.2005**
(21) Anmeldenummer: 02700003.3
(22) Anmeldetag: 21.02.2002
(51) Int. Cl.: H01S 3/08, G02B 5/08, G02B 1/10

(54) **DISPERSIVER MEHRSCHICHT-SPIEGEL**
CHIRPED MULTILAYER MIRROR
MIROIR DE DISPERSION MULTICOUCHE

(30) Priorität: 26.02.2001 AT 3022001
(43) Veröffentlichungstag der Anmeldung: 26.11.2003
(73) Patentinhaber: Femtolasers Produktions GmbH, 2100 Korneuburg (AT)
(72) Erfinder: TEMPEA, Gabriel, Florin, A-1150 Wien (AT); KRAUSZ, Ferenc, A-2331 Vösendorf (AT)
(74) Vertreter: Weinzinger, Arnulf
(86) Internationale Anmeldenummer: PCT/AT2002/000057
(87) Internationale Veröffentlichungsnummer: WO 2002/068999

(56) Entgegenhaltungen:
- EP-A- 0 416 105
- WO-A-01/04998
- WO-A-01/05000
- WO-A-01/42821

## Beschreibung

Die Erfindung betrifft einen dispersiven Mehrschicht-Spiegel mit mehreren auf einem Trägersubstrat aufgebrachten, über zueinander parallele, ebene Grenzflächen aneinander anschließenden, verschiedene optische Konstanten und verschiedene Dicken aufweisenden Einzelschichten. Ein solcher Spiegel kann in Laservorrichtungen zur Herbeiführung einer vorgegebenen - negativen oder positiven - Gruppenlaufzeit-Dispersion eingesetzt werden.

Weiters bezieht sich die Erfindung auf ein Verfahren zur Herstellung eines solchen Mehrschicht-Spiegels.

Ultrakurze Laserimpulse (mit Impulsdauern im Pikosekunden- und Femtosekundenbereich) besitzen im Frequenzbereich ein breites Spektrum. Pulse mit Spektren, die eine ganze optische Oktave (zwischen 500 nm und 1000 nm) überspannen, sind demonstriert worden, und Quellen, die Pulse mit einer spektralen Breite von ungefähr 200 nm (um 800 nm zentriert) liefern, sind bereits kommerziell verfügbar. Um im Zeitbereich einen kurzen Puls zu bilden, müssen die Frequenzkomponenten breitbandige Signale in Koinzidenz sein. Aufgrund der Wellenlängenabhängigkeit (auch "Dispersion" genannt) des Brechungsindexes werden unterschiedliche Spektralkomponenten beim Durchlaufen eines dichten optischen Mediums unterschiedlich verzögert. Um diesen Effekt quantitativ zu beschreiben, ist die Gruppenlaufzeit-Dispersion, manchmal Gruppenverzögerungsdispersion oder kurz auch GDD genannt (GDD - group delay dispersion), als die zweite Ableitung der spektralen Phase nach der Kreisfrequenz eingeführt worden. Die Dauer eines Laserpulses bleibt beim Durchlaufen eines optischen Systems unverändert, wenn die resultierende GDD des Systems gleich Null ist. Wenn das System eine GDD ≠ 0 hat, dann wird die Dauer des Pulses am Ausgang des optischen Systems einen anderen Wert haben als an dessen Eingang. Um dieser Pulsveränderung entgegenzuwirken, muss die GDD des optischen Systems kompensiert werden, d.h. eine GDD mit dem gleichen Betrag, aber einem unterschiedlichen vorzeichen muss eingeführt werden. Für die Durchführung dieser Dispersionskompensation sind bereits verschiedene optische Komponenten entwickelt worden, wie z.B. Prismen-Paare, Gitter-Paare und dispersive Spiegel (vgl. z.B. US 5 734 503 A und R. Szipocs et al.: "Chirped multilayer coatings for broadband dispersion control in femtosecond lasers", Optical Letters 1994, Vol.19, S.201-203 oder WO 00/11501 A). Dank ihrer großen Bandbreite, der Benutzerfreundlichkeit und Kompaktheit werden dispersive Mehrschicht-Spiegel (sog. chirped mirrors-CMs) immer häufiger sowohl für wissenschaftliche als auch für industrielle Anwendungen eingesetzt.

Bei der Reflexion an einem CM-Spiegel dringen die verschiedenen Wellenlängenkomponenten des Laserstrahls unterschiedlich tief in die Schichten des Spiegels ein, bevor sie reflektiert werden. Dadurch werden die verschiedenen Frequenzkomponenten unterschiedlich lang, entsprechend der jeweiligen Eindringtiefe, verzögert. Weil viele optische Komponenten eine positive GDD aufweisen, wird für die GDD-Kompensation meistens eine negative GDD benötigt. Um eine negative GDD zu erzielen, werden die kurzwelligen Wellenpakete in den oberen Schichten des CM-Spiegels reflektiert, während die langwelligen Anteile tiefer in den Spiegel eindringen, bevor sie reflektiert werden. Auf diese Weise werden die langwelligen Frequenzkomponenten gegenüber den kurzwelligen Komponenten zeitlich verzögert, was zu der erwünschten negativen GDD führt. Es gibt aber auch Anwendungen, wo eine positive GDD zur Kompensation erwünscht ist.

Ein Problem bei diesen CM-Spiegeln und ganz allgemein bei vergleichbaren Mehrschicht-Spiegeln besteht darin, dass an der Grenzfläche der obersten Schicht zur Umgebung, also an der Vorderfläche, wo die Strahlung auftrifft, eine weitgehend von der Wellenlänge unabhängige Reflexion (z.B. in der Größenordnung von 3%) auftritt. In der Folge kommt es zu Interferenzen zwischen Strahlen, die an dieser Vorderfläche reflektiert werden, und Strahlen, die tiefer in der Mehrschichtstruktur des Spiegels reflektiert werden, wobei diese Interferenzeffekte zu einer Verzerrung des Reflexionsvermögens und vor allem zu einer starken Verzerrung der Phasen- und Dispersionscharakteristik des Spiegels führen können. Um diesem Effekt zumindest teilweise entgegenzuwirken, wurde bereits vorgeschlagen (vgl. F.X. Kärntner et al. "Design and fabrication of double-chirped mirrors" 1997 Opt. Lett 22, 831; bzw. G. Tempea et al. "Dispersion control over 150 THz with chirped dielectric mirrors", 1998, IEEE JSTQE 4, 193), eine antireflektierende Beschichtung oder ein schmalbandiges Sperrfilter an der Vorderfläche, d.h. der Grenzfläche zur Umgebung (in der Regel Luft), anzubringen. Um Störresonanzen wirksam zu unterdrücken, sollte die Reflexion an der Vorderfläche in der Größenordnung von bloß 10⁻⁴% liegen. Antireflexionsschichten und Sperrfilter können eine solche Eigenschaft jedoch nur über eine sehr begrenzte Bandbreite annähern. Demzufolge konnten dispersive Mehrschicht-Spiegel in der Vergangenheit bei 800 nm-Strahlung nur über Bandbreiten von 150-160 THz betrieben werden. Weiters ist eine totale Unterdrückung der Resonanz-Interferenzeffekte nicht einmal über eine solche Bandbreite möglich, und die Dispersionskurve zeigt oft starke Schwankungen.

Diese Interferenzeffekte, die durch die an der Vorderfläche des Spiegels reflektierten Strahlen verursacht werden, können an sich auf eine wirksame Weise vermieden werden, und zwar mittels eines sog. TFI-Spiegels (TFI - tilted front interface), vgl. die ältere nicht vorveröffentlichte WO 01/42821 A1): wenn die Vorderfläche des Spiegels gegenüber den anderen Grenzflächen leicht "gekippt" wird, propagiert der Strahl, der an dieser Vorderfläche reflektiert wird, in eine andere Richtung als der vom eigentlichen Spiegel reflektierte Nutz-Strahl, so dass er mit diesem im Fernfeld nicht mehr interferieren kann. Mit dieser Ausbildung kann die Bandbreite der dispersiven Spiegel bis zu einer optischen Oktave erweitert werden. Obwohl die Struktur eines TFI-Spiegels prinzipiell einfach ist, wirft die Herstellung solcher Komponenten aber mehrere technologische Probleme auf. Ein TFI-Spiegel muss meistens eine negative GDD einführen, was wie oben beschrieben mittels einer dispersiven Schichtenanordnung erreicht werden kann; die keilförmige vordere Schicht führt jedoch eine positive GDD ein, die den negativen Beitrag der eigentlichen Spiegelschichten reduziert. Um die Nettodispersion des Spiegels nicht wesentlich zu beeinträchtigen, sollte die keilförmige Schicht möglichst dünn sein. Diese keilförmige Schicht kann jedoch nicht beliebig dünn sein, weil der Keilwinkel einen gewissen minimalen Wert betragen muss, um eine effektive Trennung der zwei Strahlen zu gewährleisten. Die idealen Parameter dieser Schicht, unter Berücksichtigung der oben angeführten Aspekte, sind: ein Keilwinkel von ≈ 1° und eine Dicke von ca. 20µm bis 50µm bei der dünnsten Kante. Eine dermaßen dicke Schicht kann mittels konventioneller Beschichtungsverfahren (wie Elektronenstrahlbedampfung oder Magnetron-Sputtering) nicht hergestellt werden. Daher bestehen nur die folgenden zwei Möglichkeiten: (1) die oberste, strahlauftreffseitige keilförmige Schicht besteht aus einem dünnen keilförmigen Plättchen als Trägersubstrat, auf dem die anderen Schichten (die dispersiven Einzelschichten und eine Antireflexionsbeschichtung) mittels eines Beschichtungsverfahrens aufgebracht werden; (2) die Einzelschichten mit den zueinander parallelen Grenzflächen werden auf einem herkömmlichen dicken optischen Trägersubstrat mittels eines Beschichtungsverfahrens aufgebracht, und auf diesen Einzelschichten wird nachträglich mittels eines speziellen, von einem Beschichtungsverfahren verschiedenen technologischen Verfahrens ein dünnes keilförmiges Plättchen aufgebracht oder hergestellt. Ein Nachteil der Methode (1) besteht darin, dass die Oberflächenqualität des TFI-Spiegels von den Spannungen in den Schichten beeinträchtigt wird. Da das Trägersubstrat dünn sein muss, führen die geringsten Spannungen (die in einer Bedampfungs- oder Sputterbeschichtung unvermeidlich sind) zu einer Krümmung bzw. Unregelmäßigkeit des dünnen keilförmigen Substrats. Bei der zweiten Möglichkeit besteht dieses Problem nicht, weil das Trägersubstrat beliebig dick sein kann. In diesem Fall muss man aber sicherstellen, dass eine Impedanzanpassung zwischen den Spiegel-Einzelschichten und dem keilförmigen Plättchen realisiert wird, um die bereits beschriebenen Interferenzeffekte zu vermeiden. Zu diesem Zweck ist die Verwendung einer Indexanpassungsflüssigkeit (auch IMF-index matching fluid) vorgeschlagen worden (s. die ältere, nachveröffentlichte WO 01/42821 A). Auf diese Weise wird eine nahezu perfekte Impedanzanpassung erreicht, weil die kommerziell verfügbaren IMFs den Brechungsindex von Glas mit einer Genauigkeit von 10⁻⁴ reproduzieren können. Aber auch in diesem Fall ist die Oberflächenqualität des Spiegels nicht zufriedenstellend, weil zwischen dem dünnen keilförmigen Plättchen und dem Schichtaufbau des Mehrschicht-Spiegels keine feste Verbindung besteht; aufgrund der geringen Dicke kann das quasi-freistehende keilförmige Plättchen eine Oberflächenqualität von λ/10 (wie in der Lasertechnik üblich) nicht aufweisen.

Der Vollständigkeit halber sei noch darauf hingewiesen, dass keilförmige optische Mehrschicht-Komponenten bereits für verschiedenste Anwendungen vorgeschlagen wurden, wie z.B. für Sperrfilter, Interferenzlichtfilter, Wellenlängen-selektive Spiegel, Strahlteiler oder dergl., wobei insbesondere vergleichsweise dicke Keilplättchen als Substrat für Mehrschichtstrukturen verwendet werden (GB 1 305 700 A; EP 416 105 A; EP 533 362 A; US 4 284 323 A; GB 2 054 195 A = DE 3 026 370 A). Es handelt sich hier somit um von dispersiven Mehrschicht-Spiegeln, die eine bestimmte Gruppenlaufzeit-Dispersion herbeiführen sollen, verschiedene Komponenten, wobei überdies die üblichen Beschichtungstechniken, mit den erwähnten Nachteilen hinsichtlich Laserqualität usw., angewandt werden.

Es ist Aufgabe der Erfindung, einen Mehrschicht-Spiegel sowie ein Verfahren zu dessen Herstellung zur Verfügung zu stellen, wobei die oben beschriebenen Nachteile der früher vorgeschlagenen Lösungen beseitigt werden und sowohl eine ideale Impedanzanpassung des Spiegels zum äußeren Medium als auch eine für die Laseranwendungen geeignete Oberflächenqualität (z.B. im Bereich von λ/6-λ/10) ermöglicht werden.

Der erfindungsgemäße dispersive Mehrschicht-Spiegel der eingangs angeführten Art ist dadurch gekennzeichnet, dass an der vom Trägersubstrat abgewandten äußersten Einzelschicht ein keilförmiges Glasplättchen mittels optischer Kontaktierung befestigt ist.

Durch die Anbringung eines keilförmigen Glasplättchens mittels optischer Kontaktierung wird eine hohe optische Qualität sichergestellt, und es werden die nachteiligen Interferenzeffekte zwischen dem im Spiegelinneren reflektierten Nutzstrahl und einem an der Spiegelvorderseite reflektierten Strahl vermieden.

Zur Erzielung eines guten Wirkungsgrades ist es ferner günstig, wenn auf dem mittels optischer Kontaktierung befestigten keilförmigen Glasplättchen eine an sich bekannte Antireflexionsbeschichtung aufgebracht ist.

Bei der Herstellung des vorliegenden Spiegels wird bevorzugt derart vorgegangen, dass nach Anbringen der Einzelschichten des Spiegels auf einem im Vergleich zu den Einzelschichten dicken, optisch poliertem Trägersubstrat auf der äußersten Einzelschicht ein planparalleles Glasplättchen mittels optischer Kontaktierung befestigt und danach poliert wird, wobei durch das Polieren eine Keilform und eine Reduktion der Dicke des Glasplättchens herbeigeführt werden. Dabei wird insbesondere ein Glasplättchen mit einer Dicke, die das Erzielen einer Oberflächenebenheit zwischen λ/4 und λ/10 erlaubt, an der äußersten Einzelschicht durch optische Kontaktierung befestigt.

Optische Kontaktierung als Verbindungstechnik zwischen Glaselementen ist an sich bereits seit längerem bekannt, vgl. beispielsweise die US 5 846 638 A, US 5 441 803 A und US 3 565 508 A. Mit einer optischen Kontaktierung kann eine Bindung von hoher optischer Qualität zwischen zwei Oberflächen erzielt werden. Mittels dieser Technik können defektfreie Grenzflächen hergestellt werden, die keine Streuverluste einführen. Wenn die Materialien, zwischen denen die optische Kontaktierung realisiert wird, gleiche optische Eigenschaften aufweisen, wird die Grenzfläche auch keine Reflexionsverluste oder Phasenverzerrungen einführen. Optische Kontaktierung kann aber nur zwischen hochplanaren Oberflächen realisiert werden. Optische Komponenten mit einer Dicke, die ein Viertel bis ein Drittel des Durchmessers beträgt, können die erforderliche Oberflächenqualität aufweisen. Für die optische Kontaktierung ist im Prinzip eine Ebenheit im Bereich von z.B. λ/6 bis λ/10 zweckmäßig, und die Oberfläche eines Glasplättchens mit einer Dicke von nur 50µm-100µm kann diese Bedingung nicht erfüllen. Demgemäß soll ein Glasplättchen mit einer Dicke, die die erforderliche Oberflächenqualität sicherstellt, mit der Schichtstruktur auf dem Trägersubstrat optisch kontaktiert werden. Nach der Herstellung der Verbindung durch optische Kontaktierung wird durch ein an sich bekanntes Verfahren das Glasplättchen schräg poliert, um den erwünschten Keilwinkel und die erwünschte Dicke zu erreichen. Um die Reflexionsverluste zu reduzieren, kann anschließend eine Antireflexionsbeschichtung auf die Vorderfläche des keilförmigen Glasplättchens aufgebracht werden. Die Beständigkeit der Verbindung durch optische Kontaktierung gegen Umwelteinflüsse (vor allem Temperaturschwankungen und Feuchtigkeit) kann durch eine geeignete thermische Behandlung, wie z.B. an sich aus US 5 441 803 A oder US 5 846 638 A bekannt, erhöht werden. Auf diese Weise wird eine gute Langzeitstabilität des Spiegels erzielt.

Die Erfindung wird nachstehend anhand von besonders bevorzugten Ausführungsbeispielen, auf die sie jedoch nicht beschränkt sein soll, und unter Bezugnahme auf die beiliegende Zeichnung noch näher erläutert. Es zeigen:
Fig.1 schematisch den Aufbau eines dispersiven Mehrschicht-Spiegels mit einem keilförmigen vorderen Glasplättchen;
Fig.2 eine Anordnung mit zwei dispersiven Mehrschicht-Spiegeln beispielsweise gemäß Fig.1 für die Kompensation einer räumlichen Dispersion (Winkeldispersion);
Fig.3 in einem Diagramm das Reflexionsvermögen R eines Spiegels gemäß Fig.1 in Abhängigkeit von der Wellenlänge λ;
Fig.4 in einem Diagramm die Gruppenlaufzeit-Dispersion GDD des Spiegels gemäß Fig.1 über der Wellenlänge λ; und
Fig.5 schematisch die Spiegeleinrichtung in einer Zwischenstufe während der Herstellung.

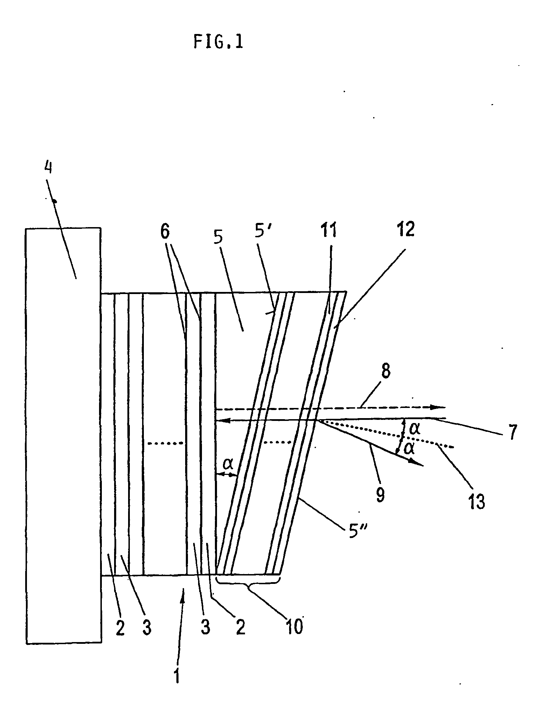

In Fig.1 ist schematisch ein dispersiver Mehrschicht-Spiegel 1 veranschaulicht, der beispielsweise aus Einzelschichten 2 mit relativ niedrigem Brechungsindex und Einzelschichten 3 mit relativ hohem Brechungsindex aufgebaut ist. Diese Einzelschichten 2, 3 sind im gezeigten Beispiel abwechselnd angeordnet, wobei insgesamt z.B. 30 bis 70 Einzelschichten 2, 3 vorhanden sein können. Diese Einzelschichten 2, 3 sind an der Vorderseite eines relativ dicken Trägersubstrats 4 in an sich herkömmlicher Weise, beispielsweise durch Niederschlagen aus der Dampfphase, aufgebracht. An der Vorderseite der Schichtstruktur mit den Einzelschichten 2, 3 ist ein keilförmiges Glasplättchen 5 mit einem Keilwinkel α angebracht, so dass eine Vorderfläche 5' erhalten wird, die im Vergleich zu den Grenzflächen 6 zwischen den Einzelschichten 2, 3 unter dem Winkel α geneigt verläuft.

Ein an der Vorderfläche 5' ankommender Strahl 7, insbesondere Laserstrahl, durchdringt das Glasplättchen 5 und wird abhängig von den Wellenlängen seiner einzelnen Frequenzkomponenten mehr oder weniger tief in der Mehrschichtstruktur 2, 3 des Spiegels 1 an den entsprechenden Grenzflächen 6 reflektiert, um so die eingangs beschriebene Dispersionskontrolle für den reflektierten Strahl 8 zu erzielen. In der Regel wird hier eine negative Gruppenlaufzeit-Dispersion GDD vorgesehen, wobei Wellen mit größeren Wellenlängen zwecks stärkerer Verzögerung tiefer in die Mehrschichtstruktur 2, 3 eindringen als kurzwellige Anteile, die im Spiegel 1 weiter außen reflektiert werden. Es sind aber auch Fälle möglich, wo eine positive GDD einzuführen ist.

Wie sich gezeigt hat, kommt es normalerweise an der Vorderfläche des Spiegels 1 zu einer wenn auch geringen, so doch - ohne schräge Vorderfläche - nachteiligen Reflexion, wobei der hier reflektierte Strahl mit den innerhalb der Mehrschichtstruktur-Einzelschichten 2, 3 des Spiegels 1 reflektierten Strahlen Interferenzen bewirkt, woraus starke Verzerrungen des Reflexionsvermögens und der Phasencharakteristik des Spiegels resultieren. Um diese Interferenz-Effekte zu vermeiden, ist wie erwähnt zu Folge des keilförmigen Glasplättchens 5 die Vorderfläche 5' relativ zu den übrigen Grenzflächen 6 schräg angeordnet, so dass der an der Vorderseite 5' des Spiegels 1 reflektierte Strahl 9 unter einem Winkel gleich dem doppelten Neigungswinkel α der Vorderfläche 5' reflektiert wird. Dadurch ist dieser schräg reflektierte Strahl 9 zumindest in einem relativ kurzen Abstand bereits kein Störfaktor, da er je nach dem Neigungswinkel α der Vorderfläche 5' sowie je nach dem Durchmesser des einfallenden Strahls 7 bereits nach einer relativ kurzen Propagationslänge, im Bereich von einigen wenigen Zentimetern, völlig von den Nutz-Strahlen 7 und 8 getrennt ist, so dass ab dieser Distanz phasenstörende Interferenzeffekte nicht mehr auftreten können.

Da der schräg reflektierte Strahl 9 zu den Verlusten des Spiegels 1 beiträgt, wird bevorzugt an der Vorderfläche 5' des keilförmigen Glasplättchens 5 in an sich bekannter Weise eine anti-reflektierende (AR-Antireflexions-) Beschichtung 10 aufgebracht, die aus mehreren Einzelschichten 11, 12 von abwechselnd schwächer brechenden Schichten 11 bzw. stärker brechenden Schichten 12 bestehen kann. Für diese AR-Beschichtung 10 können beispielsweise abwechselnd Titanoxid(TiO₂)- und Siliziumoxid (SiO₂)-Schichten oder aber Tantalpentoxid(Ta₂O₅)- und Siliziumoxid (SiO₂)-Schichten in an sich herkömmlicher Weise verwendet werden, wobei in der Regel weniger als 15 Schichten ausreichen und durch diese AR-Beschichtung 10 keine Phasenverzerrungen eingeführt werden. Mit einer derartigen AR-Beschichtung 10 ist es möglich, das Reflexionsvermögen an der nunmehr äußeren Vorderfläche 5" (Grenzfläche vom Spiegel 1 zur Umgebung) im interessanten Wellenlängenbereich von 500 nm bis 1000 nm auf unter 0,2% herabzusetzen.

Der Vollständigkeit halber ist in Fig.1 weiters die Flächennormale 13 eingezeichnet, die senkrecht auf die äußere Vorderfläche 5" steht und die Winkelsymmetrale zwischen dem einfallenden Strahl 7 und dem an der Vorderfläche 5" schräg reflektierten Strahl 9 bildet.

Für den Aufbau eines Spiegels 1 gemäß Fig.1 kann beispielsweise die folgende Schichtenstruktur gewählt werden:

| Material keilförmiges Glasplättchen 5 | Schichtdicke (nm) |
|---|---|
| SiO₂ | 259.80 |
| TiO₂ | 15.00 |
| SiO₂ | 61.38 |
| TiO₂ | 59.12 |
| SiO₂ | 18.81 |
| TiO₂ | 79.30 |
| SiO₂ | 72.89 |
| TiO₂ | 21.16 |
| SiO₂ | 118.24 |
| TiO₂ | 56.13 |
| SiO₂ | 30.30 |
| TiO₂ | 75.66 |
| SiO₂ | 96.41 |
| TiO₂ | 33.40 |
| SiO₂ | 76.25 |
| TiO₂ | 76.31 |
| SiO₂ | 80.31 |
| TiO₂ | 35.10 |
| SiO₂ | 108.49 |
| TiO₂ | 73.01 |
| SiO₂ | 72.73 |
| TiO₂ | 48.58 |
| SiO₂ | 102.70 |
| TiO₂ | 76.02 |
| SiO₂ | 95.01 |
| TiO₂ | 42.53 |
| SiO₂ | 100.45 |
| TiO₂ | 97.86 |
| SiO₂ | 100.47 |
| TiO₂ | 50.81 |
| SiO₂ | 93.09 |
| TiO₂ | 82.43 |
| SiO₂ | 132.75 |
| TiO₂ | 76.17 |
| SiO₂ | 84.22 |
| TiO₂ | 69.18 |
| SiO₂ | 148.68 |
| TiO₂ | 78.55 |
| SiO₂ | 117.82 |
| TiO₂ | 79.60 |
| SiO₂ | 154.27 |
| TiO₂ | 78.25 |
| SiO₂ | 116.50 |
| TiO₂ | 109.89 |
| SiO₂ | 143.51 |
| TiO₂ | 89.85 |
| SiO₂ | 158.38 |
| TiO₂ | 76.01 |
| SiO₂ | 174.52 |
| TiO₂ | 86.94 |
| SiO₂ | 186.03 |
| TiO₂ | 96.81 |
| SiO₂ | 167.78 |
| TiO₂ | 106.09 |
| SiO₂ | 191.54 |
| TiO₂ | 120.83 |
| SiO₂ | 187.05 |
| TiO₂ | 122.09 |
| SiO₂ | 307.80 |

### Trägersubstrat 4

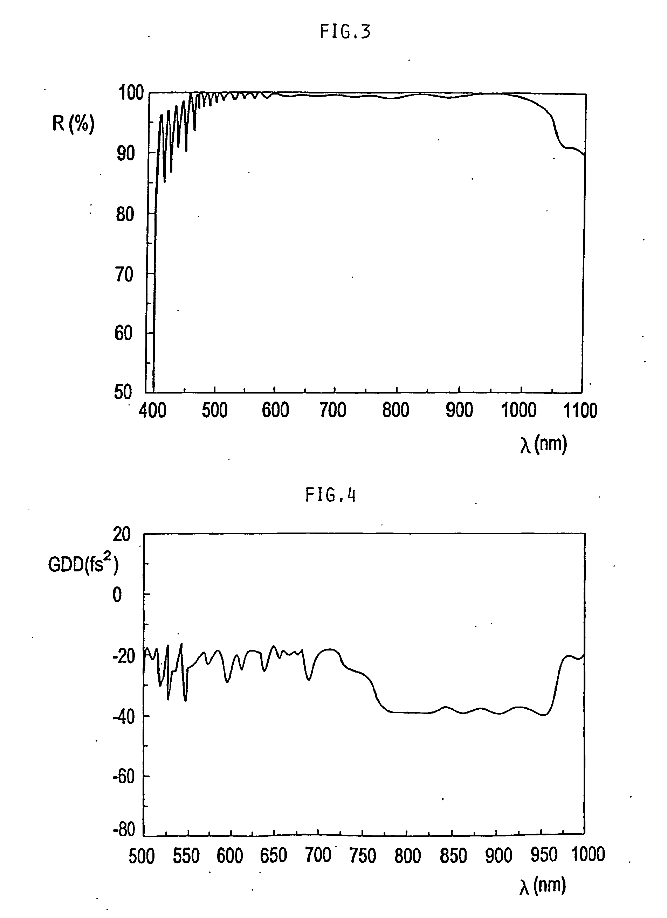

Für einen derartigen Spiegel ist in den Fig.3 und 4 entsprechend einer Computersimulation das Reflexionsvermögen R (in %) über der Wellenlänge λ (in nm) bzw. die Gruppenlaufzeit-Dispersion (group delay dispersion) GDD (in fs²) über der Wellenlänge λ (in nm) veranschaulicht. Wie aus Fig.3 ersichtlich ist das Reflexionsvermögen R im Wellenlängenbereich von 500 nm bis 1000 nm praktisch konstant; die in Fig.4 gezeigte Gruppenlaufzeit-Dispersion GDD ist negativ und weist einen leicht welligen Verlauf auf; im Bereich der größeren Wellenlängen ist die - negative - GDD betragsmäßig größer.

Die Einzelschichten 2, 3 des Mehrschicht-Spiegels 1 können je nach Anwendungsfall abhängig vom Abstand vom Glasplättchen 5 variierende Dicken haben, insbesondere mit diesem Abstand allgemein im Durchschnitt zunehmende Schichtdicken, um so eine negative Gruppenlaufzeit-Dispersion GDD bzw. eine hohe Reflektivität R in einem bestimmten spektralen Bereich zu erzielen.

Der Spiegel 1 kann ein an sich bekannter sog. "gechirpter" Spiegel (CM-Spiegel) sein, es kann sich jedoch auch um eine resonante Schichten-Struktur handeln. Die Einzelschichten 2, 3 können überdies auch an sich herkömmliche Halbleiterschichten sein, um auf diese Weise sättigbare Absorberschichten in der Spiegelstruktur einzubauen.

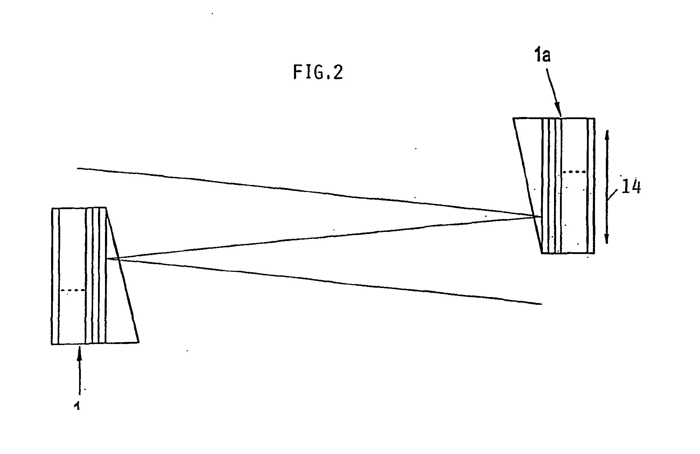

Um eine räumliche (Winkel-)Dispersion zu vermeiden bzw. zu kompensieren, ist es zweckmäßig, Spiegel 1 mit einer geneigten Vorderfläche 5' bzw. 5" wie hier beschrieben paarweise zu verwenden, wie dies aus der Fig.2 ersichtlich ist. Auf diese Weise kann die Winkeldispersion, die von einem Spiegel 1 eingeführt wird, durch den anderen Spiegel, beispielsweise den Spiegel la in Fig.2, kompensiert werden. Überdies erlaubt es eine derartige Anordnung mit Spiegelpaaren 1, 1a, die Gesamtdispersion exakt abzustimmen, wobei einer der Spiegel, z.B. der Spiegel 1a, in Querrichtung verstellt wird, wie in Fig.2 mit dem Pfeil 14 schematisch veranschaulicht ist.

Durch das beschriebene vorderseitige keilförmige Glasplättchen 5 des vorliegenden Mehrschicht-Spiegels 1 wird die Impedanz-Fehlanpassung an der äußersten Grenzfläche (Vorderfläche 5 bzw. 5') vermieden, und die Durchlässigkeit unterhalb des Hochreflexionsbandes des Spiegels 1 wird wesentlich verbessert, da Interferenzbanden höherer Ordnung teilweise unterdrückt werden. Demgemäß kann der vorliegende Spiegel 1 ein hohes Reflexionsvermögen R und eine konstante Gruppenlaufzeit-Dispersion GDD im Wellenlängenbereich von 600 nm bis 950 nm sowie eine hohe Durchlässigkeit in der Nähe der üblichen Pumpstrahl-Wellenlänge (520 nm bis 540 nm) aufweisen. Die Transmission eines Bragg-Spiegels bei der Pumpstrahl-Wellenlänge kann auch durch ein Schrägstellen der vordersten Grenzfläche relativ zu den übrigen Grenzflächen 6 der Schichtstruktur erhöht werden. Der vorliegende Spiegel 1 ist bezüglich Abweichungen von der Nenndicke der Einzelschichten 2, 3, nicht so empfindlich wie herkömmliche "gechirpte" Spiegel, bei denen bereits relativ geringfügige Herstellungsfehler zu starken Schwankungen insbesondere in der GDD-Kurve führen können.

Eine hohe Stabilität und optische Qualität des vorliegenden Spiegels 1 wird dadurch erreicht, dass eine Impedanzanpassung zwischen der eigentlichen Mehrschichtstruktur 2, 3 und dem obersten keilförmigen Glasplättchen 5 unabhängig von der Schichtstruktur erreicht wird.

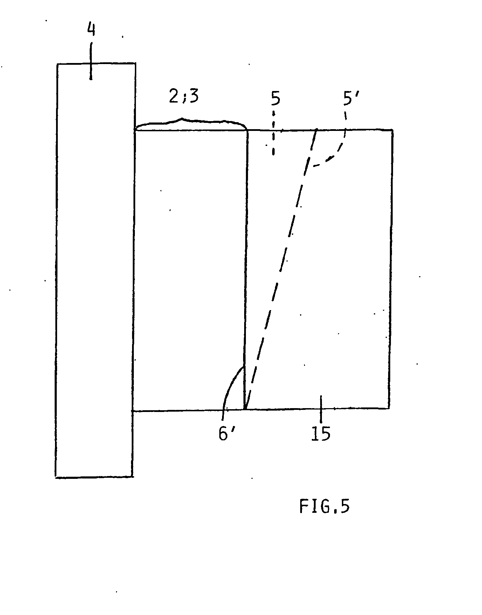

Um diese Eigenschaften, wie insbesondere die hohe optische Qualität bzw. die Impedanzanpassung an der Grenzfläche zwischen dem Glasplättchen 5 und der Schichtstruktur 2; 3 zu erzielen, wird das Glasplättchen 5 durch die Technik der optischen Kontaktierung an der Schichtstruktur 2; 3 angebracht. Dadurch wird die Oberflächenqualität des Glasplättchens 5 verbessert, und es wird eine ideale Impedanzanpassung erhalten. Für die Anbringung des keilförmigen Glasplättchens 5 mit Hilfe der optischen Kontaktierung ist jedoch eine bestimmte Mindestdicke des Glasplättchens 5 zu beachten, beispielsweise im Bereich von 3 mm bis 7 mm, gegebenenfalls abhängig vom Durchmesser des Glasplättchens 5; es wird daher bei der Herstellung des vorliegenden Spiegels 1 derart vorgegangen, dass ein relativ dickes Glasplättchen, mit planparallelen Flächen, auf der Schichtstruktur 2; 3 - die zuvor auf dem Trägersubstrat 4 hergestellt wurde - angebracht wird. Dieser Vorgang ist in Fig.5 veranschaulicht, wobei das dicke, planparallele Glasplättchen mit 15 bezeichnet ist. Nach der Anbringung des Glasplättchens 15 auf der Schichtstruktur 2; 3 durch optische Kontaktierung an der Grenzfläche 6' - wo ein hohes Maß an Ebenheit, in der Größenordnung von ¹/₆ bis ¹/₁₀ der Wellenlänge λ der Lichtstrahlen bzw. Laserstrahlen, erforderlich ist, und wo Einschlüsse bzw. Verunreinigungen vermieden werden müssen (so dass zweckmäßig die optische Kontaktierung in einem Reinraum vorgenommen wird) - wird das Glasplättchen 15 durch eine herköliche Poliertechnik auf die Form des keilförmigen Glasplättchens 5 reduziert, wie in Fig.5 mit gestrichelter Linie - entsprechend der schrägen Vorderfläche 5' gemäß Fig.1 - angedeutet ist. Im Anschluss an diesen Vorgang des Anbringens des keilförmigen Glasplättchens 5 durch Befestigen eines dickeren Glasplättchens 15 mittels optischer Kontaktierung und nachfolgende Abtragung eines Teils der Dicke dieses Glasplättchens 15, um das keilförmige Glasplättchen 5 zu erhalten, wird zweckmäßig die vorstehend anhand der Fig.1 beschriebene Anti-Reflexionsbeschichtung 10 an der Vorderfläche 5' des keilförmigen Glasplättchens 5 angebracht.

Vor dem Schrägpolieren des Glasplättchens 15 zur Erzielung des keilförmigen Glasplättchens 5 kann noch eine thermische Behandlung der Bindung des Glasplättchens 15 mit der Schichtstruktur 2; 3 durchgeführt werden, um so diese Bindung - an der Grenzfläche 6' - zu stabilisieren und eine höhere Beständigkeit gegen Umwelteinflüsse, wie Temperaturschwankungen und Feuchtigkeit, sicherzustellen.

## Patentansprüche

1. Dispersiver Mehrschicht-Spiegel (1) mit mehreren auf einem Trägersubstrat (4) aufgebrachten, über zueinander parallele, ebene Grenzflächen aneinander anschließenden, verschiedene optische Konstanten und verschiedene Dicken aufweisenden Einzelschichten (2, 3), **dadurch gekennzeichnet, dass** an der vom Trägersubstrat (4) abgewandten äußersten Einzelschicht (2) ein keilförmiges Glasplättchen (5) mittels optischer Kontaktierung befestigt ist.

2. Mehrschicht-Spiegel nach Anspruch 1, **dadurch gekennzeichnet, dass** auf dem mittels optischer Kontaktierung befestigten keilförmigen Glasplättchen (5) eine Antireflexionsbeschichtung (10) aufgebracht ist.

3. Verfahren zur Herstellung eines Mehrschicht-Spiegels (1) nach Anspruch 1 oder 2, **dadurch gekennzeichnet, dass** nach Anbringen der Einzelschichten (2, 3) des Spiegels (1) auf einem im Vergleich zu den Einzelschichten (2, 3) dicken, optisch poliertem Trägersubstrat (4) auf der äußersten Einzelschicht (2) ein planparalleles Glasplättchen (5) mittels optischer Kontaktierung befestigt und danach poliert wird, wobei durch das Polieren eine Keilform und eine Reduktion der Dicke des Glasplättchens (5) herbeigeführt werden.

4. Verfahren nach Anspruch 3, **dadurch gekennzeichnet, dass** ein Glasplättchen (5) mit einer Dicke, die das Erzielen einer Oberflächenebenheit zwischen λ/4 und λ/10 erlaubt, an der äußersten Einzelschicht (2) durch optische Kontaktierung befestigt wird.

5. Verfahren nach Anspruch 3 oder 4, **dadurch gekennzeichnet, dass** die durch die optische Kontaktierung realisierte Verbindung thermisch behandelt wird, um die Langzeitstabilität des Spiegels (1) zu verbessern.

## Claims

1. A dispersive multilayer mirror (1) comprising several individual layers (2, 3) applied to a carrier substrate (4) and adjoining each other via parallel, plane surfaces having different optical constants and different thicknesses, **characterized in that** a wedge-shaped glass platelet (5) is fastened to the outermost individual layer (2) facing away from the carrier substrate (4) by optical contact.

2. A multilayer mirror according to claim 1, **characterized in that** an anti-reflexion coating (10) is applied on the wedge-shaped glass platelet (5) that is fastened by optical contact.

3. A method of producing a multilayer mirror (1) according to claim 1 or 2, **characterized in that** after the application of the individual layers (2, 3) of the mirror (1) on an optically polished carrier substrate (4) which is thick as compared to the individual layers (2, 3), a plane-parallel glass platelet (5) is fastened on the outermost individual layer (2) by optically contacting and then is polished, a wedge shape and a reduction of the thickness of the glass-platelet (5) being caused by this polishing.

4. A method according to claim 3, **characterized in that** a glass platelet (5) having a thickness which makes it possible to obtain a surface evenness of between λ/4 and λ/10 is fastened to the outermost individual layer (2) by optically contacting.

5. A method according to claim 3 or 4, **characterized in that** the connection realized by optically contacting is thermally treated for improving the long-time stability of the mirror (1).

## Revendications

1. Miroir de dispersion à plusieurs couches (1) avec plusieurs couches individuelles (2, 3) appliquées sur un substrat de support (4), se raccordant les unes aux autres par des surfaces limites planes parallèles les unes aux autres, présentant différentes constantes optiques et différentes épaisseurs, **caractérisé en ce que** sur la couche individuelle (2) la plus extérieure, tournée à l'opposé du substrat de support (4) est fixée, par mise en contact optique, une plaquette de verre (5) de forme conique.

2. Miroir à plusieurs couches selon la revendication 1, **caractérisé en ce que** sur la plaquette de verre (5) de forme conique, fixée par mise en contact optique, est appliqué un revêtement antireflet (10).

3. Procédé de fabrication d'un miroir à plusieurs couches (1) selon la revendication 1 ou 2, **caractérisé en ce qu'**après application des couches individuelles (2, 3) du miroir (1) sur un substrat de support (4) poli optiquement, épais par rapport aux couches individuelles (2, 3), on fixe sur la couche individuelle (2) la plus extérieure une plaquette de verre (5) à faces planes et parallèles par mise en contact optique, puis on la polit, le polissage ayant pour effet une forme conique et une réduction de l'épaisseur de la plaquette de verre 5.

4. Procédé selon la revendication 3, **caractérisé en ce qu'**une plaquette de verre (5) d'une épaisseur qui permet d'obtenir une planéité de surface comprise entre λ/4 et λ/10, est fixée sur la couche individuelle (2) la plus extérieure par mise en contact optique.

5. Procédé selon la revendication 3 ou 4, **caractérisé en ce que** la liaison réalisée par la mise en contact optique est traitée thermiquement afin d'améliorer la stabilité à long terme du miroir (1).
